# EUROPEAN PATENT SPECIFICATION

(11) **EP 4 098 431 B1**
(45) Date of publication and mention of the grant of the patent: **10.04.2024**
(21) Application number: 22175762.8
(22) Date of filing: 27.05.2022
(51) Int. Cl.: B29C 65/18, B29C 65/48, B29C 65/50

(54) **BONDING METHOD**
BONDINGVERFAHREN
PROCÉDÉ DE LIAISON

(30) Priority: 01.06.2021 JP 2021092211
(43) Date of publication of application: 07.12.2022
(73) Proprietor: Mitsubishi Heavy Industries, Ltd., Tokyo 100-8332 (JP)
(72) Inventor: Uchida, Koki, Tokyo, 100-8332 (JP); Kani, Yuki, Tokyo, 100-8332 (JP); Ozaki, Ryota, Tokyo, 100-8332 (JP)
(74) Representative: Hoffmann Eitle

(56) References cited:
- US-A- 4 789 594
- US-B2- 9 284 035

## Description

### BACKGROUND

### 1. TECHNICAL FIELD

The present disclosure relates to a bonding method for bonding a first composite material and a second composite material to each other both containing a fiber base material and a thermoplastic resin.

### 2. DESCRIPTION OF RELATED ART

It is known that, when a plurality of composite materials formed of fiber reinforced plastic are bonded to each other, a filler (filling material) is arranged in a clearance formed between the plurality of composite materials to increase the bonding strength of the plurality of composite materials (see, for example, U.S. Patent No. 9327470).

U.S. Patent No. 9327470 discloses that a filler shaped along a clearance is manufactured by using a system having a device that laminates layers one by one to form a laminated body and a device that cuts the laminated body into a desired width.
US 9 284 035 B2 discloses a bonding method for bonding a first composite material and a second composite material to each other. Both composite materials have a bonding region and a region adjacent to the bonding region, respectively. A clearance is formed between both regions adjacent to the bonding region and both bonding regions are arranged to face each other. A bonding member molded in a shape corresponding to the clearance is placed in the clearance before heating the composite materials, and the bonding member in order to bond the adjacent regions to the bonding member.

### BRIEF SUMMARY

In the art of U.S. Patent No. 9327470, however, a system that stacks layers one by one to form a laminated body and cuts each laminated body into a desired width is required, which requires a large capital investment. In particular, when the resin contained in the laminated body is a thermoplastic resin, the thermoplastic resin is required to be heated so that the laminated body can be cut, which requires a large capital investment because of the system having a heating function.

The present disclosure has been made in view of such circumstances and intends to provide a bonding method that can increase the bonding strength in bonding a plurality of composite materials without requiring a large capital investment.

This object is solved by a bonding method with the features of claim 1. Preferred embodiments follow from the other claims.
A bonding method according to an aspect of the present disclosure is a method for bonding a first composite material and a second composite material to each other both containing a fiber base material and a thermoplastic resin, wherein the first composite material is formed in a plate shape extending along an axis and has a first bonding region and a first adjacent region adjacent to the first bonding region, wherein the second composite material is formed in a plate shape extending along the axis and has a second bonding region and a second adjacent region adjacent to the second bonding region, and wherein a clearance extending along the axis is formed between the first adjacent region and the second adjacent region with the first bonding region and the second bonding region being arranged to face each other, the bonding method comprising: a cutting step of cutting a bonding composite material containing a fiber base material and a thermoplastic resin and formed in a plate shape to produce a plurality of long bonding members; a molding step of molding a bonding member of the plurality of bonding members produced in the cutting step into a shape corresponding to the clearance by placing and heating the bonding member in a forming die; a placing step of placing, in the clearance, the bonding member molded in the shape corresponding to the clearance in the molding step into a state where the first bonding region is in contact with the second bonding region and the first adjacent region and the second adjacent region are in contact with the bonding member; and a heating step of heating the first composite material, the second composite material, and the bonding member with the first adjacent region and the second adjacent region being in contact with the bonding member to bond the first bonding region to the second bonding region and bond the first adjacent region and the second adjacent region to the bonding member.

According to the present disclosure, it is possible to provide a bonding method that can increase the bonding strength in bonding a plurality of composite materials without requiring a large capital investment.

### BRIEF DESCRIPTION OF THE SEVERAL VIEWS OF THE DRAWINGS

Fig. 1 is a perspective view illustrating a structure according to a first embodiment of the present disclosure.
Fig. 2 is a sectional view on arrow A-A of the structure illustrated in Fig. 1.
Fig. 3 is a partial sectional view illustrating the structure before a first composite material and a second composite material are bonded via a filler.
Fig. 4 is a partial sectional view illustrating the structure after the first composite material and the second composite material are bonded via the filler.
Fig. 5 is a flowchart illustrating a bonding method of the present embodiment.
Fig. 6 is a perspective view illustrating a filler-making composite material of the present embodiment.
Fig. 7 is a perspective view illustrating a plurality of fillers produced after the filler-making composite material is cut.
Fig. 8 is a perspective view illustrating a filler forming die.
Fig. 9 is a sectional view on arrow A-A of the filler forming die illustrated in Fig. 8.
Fig. 10 is a partial sectional view illustrating a structure in a pressing step and a heating step.
Fig. 11 is a sectional view on arrow B-B of the structure illustrated in Fig. 10.
Fig. 12 is a partial sectional view illustrating a structure before a first composite material, a second composite material, and a third composite material are bonded via a filler.
Fig. 13 is a partial sectional view illustrating a structure after the first composite material, the second composite material, and the third composite material are bonded via the filler.
Fig. 14 is a diagram illustrating a shape of a filler in a cross section orthogonal to an axis in which the solid line represents a state after the filler is molded by the molding step and the dotted line represents a state after the pressing step and the heating step are completed.
Fig. 15 is a sectional view illustrating a first modified example of the structure.
Fig. 16 is a sectional view illustrating a second modified example of the structure.

### DETAILED DESCRIPTION

Embodiments according to the present disclosure will be described below. Each embodiment described below illustrates an aspect of the present disclosure and is not intended to limit the present disclosure. Each embodiment described below can be modified into any form within the scope of the technical concept of the present disclosure.

### First Embodiment

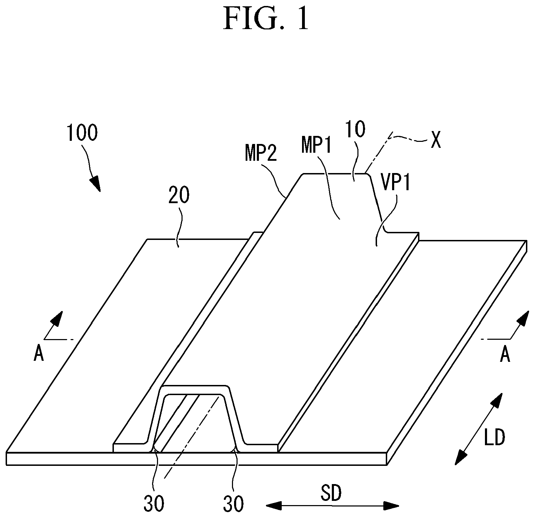

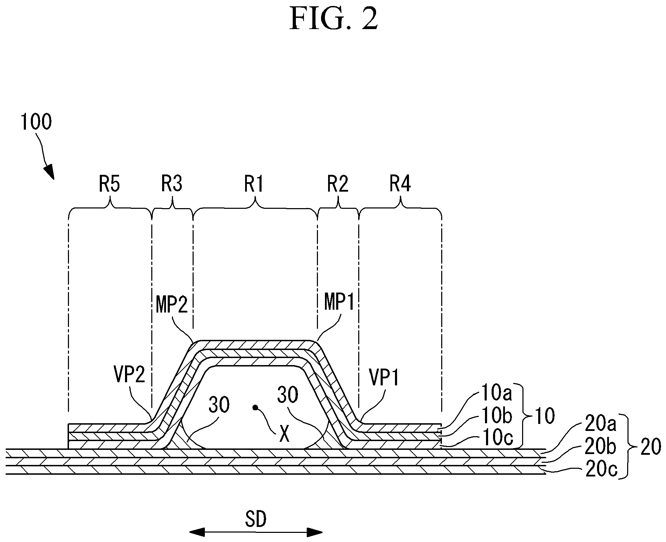

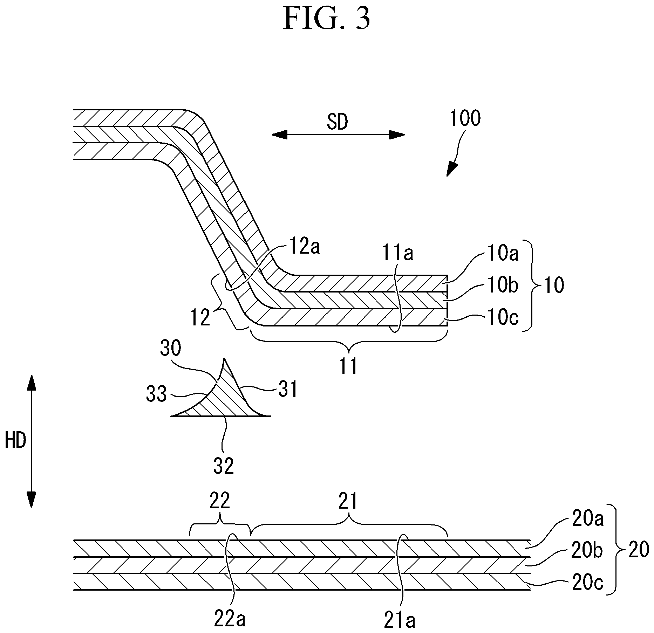

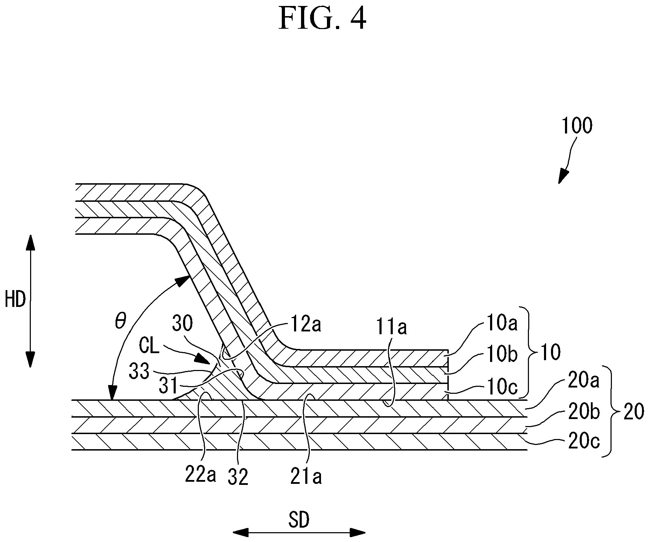

A structure 100 and a bonding method according to a first embodiment of the present disclosure will be described below with reference to the drawings. Fig. 1 is a perspective view illustrating the structure 100 according to the present embodiment. Fig. 2 is a sectional view on arrow A-A of the structure 100 illustrated in Fig. 1. Fig. 3 is a partial sectional view illustrating the structure 100 before a first composite material 10 and a second composite material 20 are bonded via a filler (bonding member) 30. Fig. 4 is a partial sectional view illustrating the structure 100 after the first composite material 10 and the second composite material 20 are bonded via the filler 30.

As illustrated in Fig. 1 and Fig. 2, the structure 100 of the present embodiment includes the first composite material 10, the second composite material 20, and the filler 30 that bonds the first composite material 10 and the second composite material 20 to each other. The first composite material 10 and the second composite material 20 are members formed in a plate shape extending along the longitudinal direction LD parallel to the axis X. The first composite material 10 has a recess/protrusion shape along the shorter direction SD orthogonal to the axis X. The second composite material 20 has a planar shape extending along a horizontal surface parallel to both the longitudinal direction LD and the shorter direction SD.

The first composite material 10 is made by laminating three layers of sheet-like composite materials 10a, 10b, and 10c and shaping and molding the planar-shaped laminated body (not illustrated). The first composite material 10 has a substantially hat shape in sectional view in which the first composite material 10 is bent at a plurality of bending portions. The first composite material 10 is used as a stringer that is a structure of an aircraft fuselage, for example. Although the first composite material 10 in which three layers of composite materials 10a, 10b, and 10c are laminated is used in the present embodiment, the first composite material 10 in which two or more, any number of layers are laminated may be used.

The composite materials 10a, 10b, and 10c included in the first composite material 10 each contain a fiber base material and a matrix resin (resin material). The fiber base material contained in the composite materials 10a, 10b, and 10c is carbon fiber, for example. The matrix resin contained in the composite materials 10a, 10b, and 10c is a thermoplastic resin material and may be, for example, polyaryl ether ketone (PAEK), polyether ether ketone (PEEK), polyether ketone ketone (PEKK), polyethylene terephthalate (PET), polybutylene terephthalate (PBT), nylon 6 (PA6), nylon 66 (PA66), polyphenylene sulfide (PPS), polyetherimide (PEI), or the like.

As illustrated in Fig. 1 and Fig. 2, the first composite material 10 has a first region R1, a second region R2, a third region R3, a fourth region R4, and a fifth region R5 partitioned by a mountain fold part MP1, a mountain fold part MP2, a valley fold part VP1, and a valley fold part VP2 and extending in the longitudinal direction LD, respectively. The first region R1 is a region between the mountain fold part MP1 and the mountain fold part MP2. The second region R2 is a region between the mountain fold part MP1 and the valley fold part VP1.

The third region R3 is a region between the mountain fold part MP2 and the valley fold part VP2. The fourth region R4 is a region adjacent to the second region R2 via the valley fold part VP1. The fifth region R5 is a region adjacent to the third region R3 via the valley fold part VP2. The part between the first region R1 and the second region R2, the part between the first region R1 and the third region R3, the part between the second region R2 and the fourth region R4, and the part between the third region R3 and the fifth region R5 have R-shapes smoothly curved with respective predetermined curvatures.

As illustrated in Fig. 3, the first composite material 10 has a first bonding region 11 bonded to a second bonding region 21 of the second composite material 20 and has a first adjacent region 12 adjoined to the first bonding region 11 and bonded to the filler 30. The first composite material 10 is bent on the boundary between the first bonding region 11 and the first adjacent region 12 in the shorter direction SD.

As illustrated in Fig. 4, a bonding surface 11a of the first bonding region 11 is bonded to a bonding surface 21a of the second composite material 20. A first adjacent surface 12a of the first adjacent region 12 is bonded to a bonding surface (first bonding surface) 31 of the filler 30.

The second composite material 20 is made by laminating three layers of sheet-like composite materials 20a, 20b, and 20c and molding the laminated layers into a planar shape. The second composite material 20 is used as a skin that is a structure of an aircraft fuselage, for example. Although the second composite material 20 in which three layers of composite materials 20a, 20b, and 20c are laminated is used in the present embodiment, the second composite material 20 in which two or more, any number of layers are laminated may be used. Alternatively, the second composite material 20 may be formed of a single layer of composite material. Further, although the second composite material 20 is formed in a planar shape in the shorter direction SD, the second composite material 20 may be formed in an arc shape having a curvature in the shorter direction SD.

The composite materials 20a, 20b, and 20c included in the second composite material 20 each contain a fiber base material and a matrix resin (resin material). The fiber base material contained in the composite materials 20a, 20b, and 20c is carbon fiber, for example. The matrix resin contained in the composite materials 20a, 20b, and 20c is a thermoplastic resin material. The examples of the thermoplastic resin material are the same as those for the first composite material 10.

As illustrated in Fig. 3, the second composite material 20 has a second bonding region 21 bonded to the first bonding region 11 of the first composite material 10 and has a second adjacent region 22 adjoined to the second bonding region 21 and bonded to the filler 30. As illustrated in Fig. 4, a bonding surface 21a of the second bonding region 21 is bonded to the bonding surface 11a of the first composite material 10. A second adjacent surface 22a of the second adjacent region 22 is bonded to a bonding surface (second bonding surface) 32 of the filler 30.

The filler 30 is a member that bonds the first composite material 10 and the second composite material 20 to each other in a clearance CL formed between the first composite material 10 and the second composite material 20. The filler 30 has a bonding surface 31, a bonding surface 32, and a connecting surface 33 and is formed in a triangular prism extending in the longitudinal direction LD. The connecting surface 33 is a surface connecting the bonding surface 31 and the bonding surface 32 to each other.

As illustrated in Fig. 4, the clearance CL is formed between the first adjacent surface 12a of the first adjacent region 12 of the first composite material 10 and the second adjacent surface 22a of the second adjacent region 22 of the second composite material 20 in a state where the bonding surface 11a of the first composite material 10 and the bonding surface 21a of the second composite material 20 are arranged so as to face each other. The clearance CL is formed so as to extend along the axis X.

As illustrated in Fig. 4, the filler 30 has a shape corresponding to the clearance CL and is arranged so as to fill the clearance CL without forming a space. The filler 30 of the present embodiment has a substantially triangular sectional shape that fills the clearance CL between the second adjacent surface 22a extending in the shorter direction SD and the first adjacent surface 12a extending in a direction inclined by an inclination angle θ with respect to the second adjacent surface 22a.

The connecting surface 33 of the filler 30 has a substantially arc shape recessed inward in sectional view. The connecting surface 33 is shaped such that the distance from the bonding surface 31 gradually decreases toward the vertex at which the connecting surface 33 is connected to the bonding surface 31. Similarly, the connecting surface 33 is shaped such that the distance from the bonding surface 32 gradually decreases toward the vertex at which the connecting surface 33 is connected to the bonding surface 32.

Such a shape of the connecting surface 33 makes it possible to suppress that stress concentration at a bonding part between the filler 30 and the first composite material 10 causes the filler 30 to peel off from the first composite material 10 and that stress concentration at a bonding part between the filler 30 and the second composite material 20 causes the filler 30 to peel off from the second composite material 20.

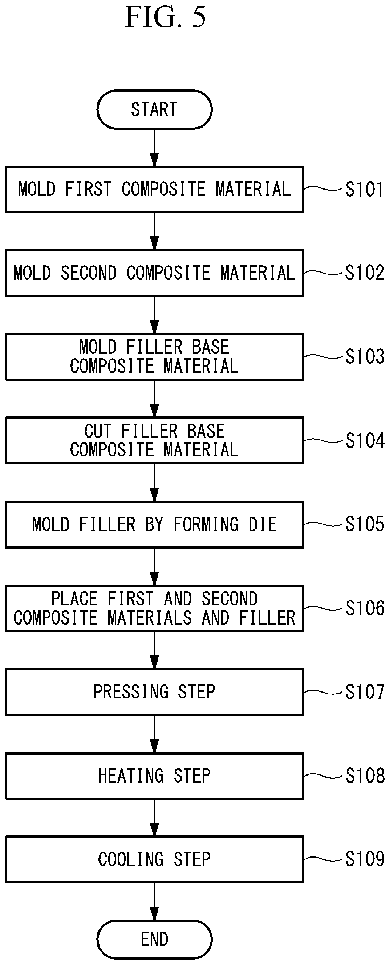

Next, a bonding method for bonding the first composite material 10 and the second composite material 20 via the filler 30 will be described with reference to the drawings. The bonding method of the present embodiment is a method for bonding, via the filler 30, the first composite material 10 and the second composite material 20 to each other both containing a fiber base material and a thermoplastic resin. Fig. 5 is a flowchart illustrating a bonding method of the present embodiment.

As illustrated in Fig. 5, in step S101, the first composite material 10 is molded. The first composite material 10 is molded by laminating three layers of sheet-like composite materials 10a, 10b, and 10c, pushing the planar-shaped laminated body (not illustrated) against a shaping tool (not illustrated), and performing shaping while heating and pressing the laminated body. The first composite material 10 molded in step S101 has a substantially hat shape in the cross section orthogonal to the longitudinal direction LD, as illustrated in Fig. 2.

In step S102, the second composite material 20 is molded. The second composite material 20 is molded into a planar shape by laminating three layers of sheet-like composite materials 20a, 20b, and 20c while the laminated layers are heated and pressed. As illustrated in Fig. 2, the second composite material 20 molded in step S102 has a planar shape whose cross section orthogonal to the longitudinal direction LD extends in the shorter direction SD.

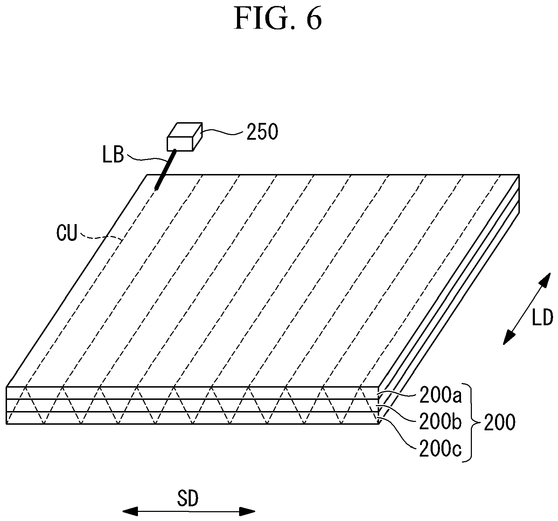

In step S103, a filler-making composite material (bonding composite material) 200 is molded. The filler-making composite material 200 is a composite material used for producing the fillers 30 and is made by laminating three layers of sheet-like composite materials 200a, 200b, and 200c and molding the laminated layers into a planar shape, as illustrated in Fig. 6. Fig. 6 is a perspective view illustrating the filler-making composite material 200 of the present embodiment.

Although the filler-making composite material 200 in which three layers of composite materials 200a, 200b, and 200c are laminated is used in the present embodiment, the filler-making composite material 200 in which two or more, any number of layers are laminated may be used. Alternatively, the filler-making composite material 200 may be formed of a single layer of composite material. Further, although the second composite material 20 is formed in a planar shape in the shorter direction SD and the longitudinal direction LD, the second composite material 20 may be formed in an arc shape having a curvature in at least any one of the shorter direction SD and the longitudinal direction LD.

The composite materials 200a, 200b, and 200c included in the filler-making composite material 200 each contain a fiber base material and a matrix resin (resin material). The fiber base material contained in the composite materials 200a, 200b, and 200c is carbon fiber, for example. The matrix resin contained in the composite materials 200a, 200b, and 200c is a thermoplastic resin material. Examples of the thermoplastic resin material are the same as those for the first composite material 10.

Note that steps S101, S102, and S103 described above may be performed in any order or may be performed simultaneously.

In step S104, the filler-making composite material 200 is cut in the longitudinal direction LD to produce a plurality of long fillers 30 each extending in the longitudinal direction LD. As illustrated in Fig. 6, the filler-making composite material 200 is cut along cut lines CU by moving a laser cutting device 250, which emits a laser beam LB, in the longitudinal direction LD, for example. The laser cutting device 250 cuts the filler-making composite material 200 along a plurality of cut lines CU while switching the emission direction of the laser beam LB and also the position of the shorter direction SD.

In step S104, although the filler-making composite material 200 is at normal temperature (for example, about 0 °C to 35 °C), other schemes may be employed. For example, to facilitate cutting, the filler-making composite material 200 may be heated by a heating device (not illustrated) over the softening point of a thermoplastic resin contained in the filler-making composite material 200.

Note that, in step S104, although the filler-making composite material 200 is cut by the laser cutting device 250 that emits the laser beam LB, other schemes may be employed. For example, other cutting devices such as a wire electric discharge machine, a water jet cutting device, or the like may be used.

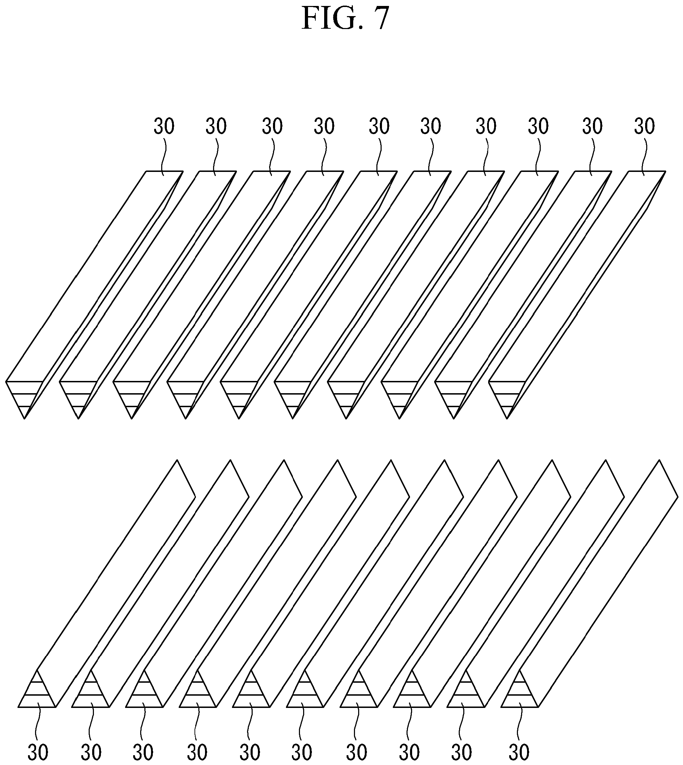

In step S104, once the filler-making composite material 200 is cut along the cut lines CU, a state illustrated in Fig. 7 is obtained. Fig. 7 is a perspective view illustrating a plurality of fillers 30 produced by cutting the filler-making composite material 200. Fig. 7 illustrates an example in which 20 fillers 30 are produced from one filler-making composite material 200.

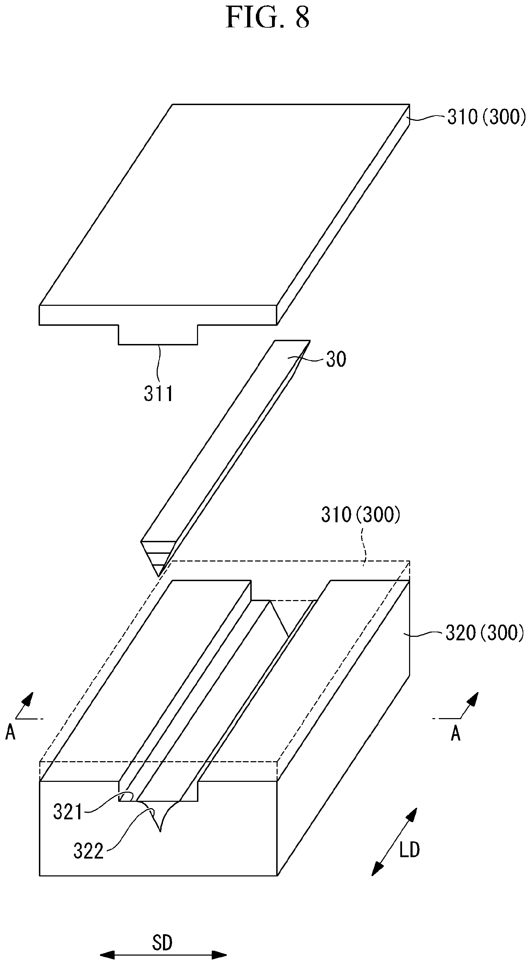

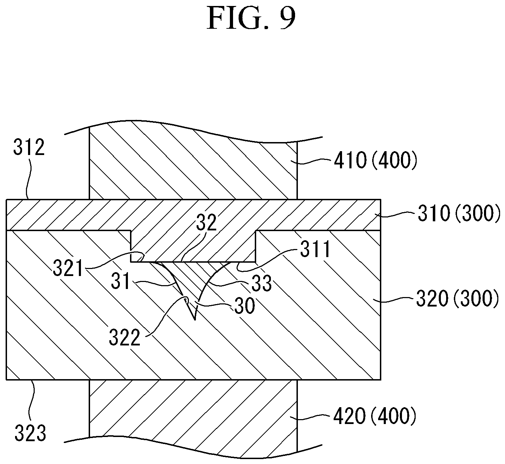

In step S105, the fillers 30 produced by cutting the filler-making composite material 200 are placed and heated in a forming die 300 and each molded in a shape corresponding to the clearance CL. Fig. 8 is a perspective view illustrating the forming die 300. Fig. 9 is a sectional view on arrow A-A of the forming die 300 illustrated in Fig. 8. Fig. 8 illustrates a state before the filler 30 is placed in the forming die 300. Fig. 9 illustrates a state where the filler 30 is placed in the forming die 300.

As illustrated in Fig. 8, the forming die 300 has an upper die 310 and a lower die 320. In the lower die 320, a recess 321 extending in the longitudinal direction LD and a lower die molding surface 322 formed in the bottom of the recess 321 and extending in the longitudinal direction LD are formed. The lower die molding surface 322 has a shape corresponding to the R-shape formed in the clearance CL between the first composite material 10 and the second composite material 20. An upper die molding surface 311 protruding downward is formed on the upper die 310.

As illustrated in Fig. 9, in a state where the filler 30 is placed in the forming die 300, the bonding surfaces 31 and 32 of the filler 30 having the substantially triangular cross section come into contact with the lower die molding surface 322, and the connecting surface 33 comes into contact with the upper die molding surface 311. Further, an upper die pressing and heating unit 410 of a pressing and heating device 400 comes into contact with the upper surface 312 of the upper die 310, and a lower die pressing and heating unit 420 of the pressing and heating device 400 comes into contact with the under surface 323 of the lower die 320.

The upper die pressing and heating unit 410 presses the upper die 310 in a direction in which the upper die 310 comes closer to the lower die 320, and the lower die pressing and heating unit 420 presses the lower die 320 in a direction in which the lower die 320 comes closer to the upper die 310. Accordingly, the filler 30 is in a state where the bonding surfaces 31 and 32 are pressed by the lower die molding surface 322 and the connecting surface 33 is pressed by the upper die molding surface 311.

The pressing and heating device 400 transfers heat to the upper die 310 and the lower die 320 so that the thermoplastic resin contained in the filler 30 is heated above the softening point (or the melting point) while pressing the upper die 310 and the lower die 320. The upper die 310 and the lower die 320 are formed of a metal material and transfer heat transferred from the pressing and heating device 400 to the filler 30.

The filler 30 is in a state where the shape thereof can be changed by the heat transferred from the pressing and heating device 400 and is molded into a shape along the upper die molding surface 311 and the lower die molding surface 322 by a pressure transferred from the pressing and heating device 400. According to the process described above, the filler 30 is molded into a shape corresponding to the clearance CL formed between the first composite material 10 and the second composite material 20.

The shape corresponding to the clearance CL refers to a shape similar to the shape of the clearance CL and having a larger sectional area than the clearance CL in a cross section orthogonal to the longitudinal direction LD. The reason why the sectional area of the filler 30 is larger than the sectional area of the clearance CL is to prevent a void from being formed between the bonding surface 31 of the filler 30 and the first adjacent region 12 of the first composite material 10 and between the bonding surface 32 of the filler 30 and the second adjacent region 22 of the second composite material 20 when the filler 30 is bonded to the first composite material 10 and the second composite material 20.

In step S106, the filler 30 molded in a shape corresponding to the clearance CL in step S105 (molding step) is placed in the clearance CL to obtain the state illustrated in Fig. 4. Once the filler 30 is placed in the clearance CL, this results in a state where the first bonding region 11 of the first composite material 10 is in contact with the second bonding region 21 of the second composite material 20, the first adjacent region 12 of the first composite material 10 is in contact with the bonding surface 31 of the filler 30, and the second adjacent region 22 of the second composite material 20 is in contact with the bonding surface 32 of the filler 30.

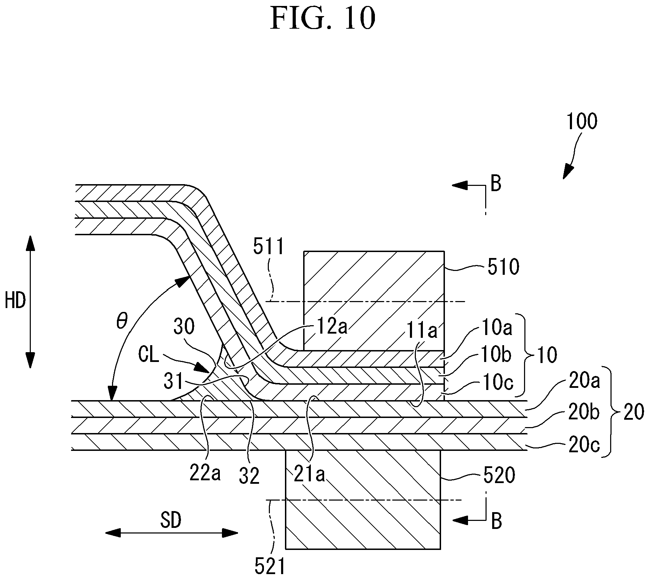

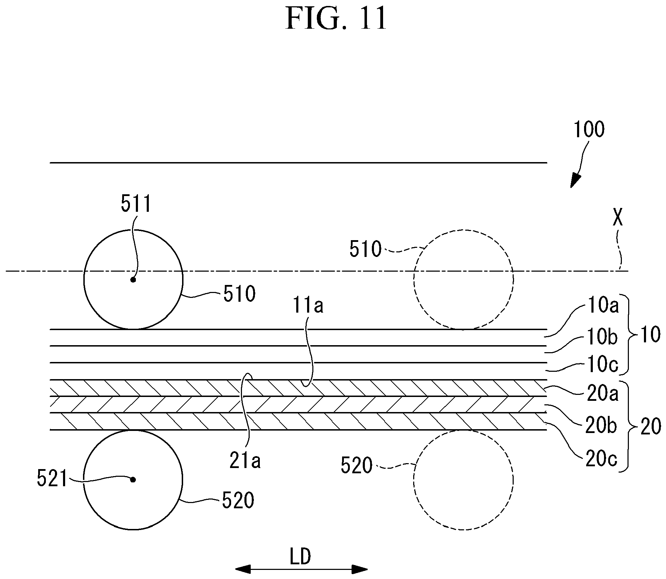

In step S107, the bonding surface 11a of the first bonding region 11 of the first composite material 10 and the bonding surface 21a of the second bonding region 21 of the second composite material 20 are pressed so as to come close to each other by using a pair of bonding rollers 510 and 520. Fig. 10 is a partial sectional view illustrating the structure 100 in the pressing step and the heating step. Fig. 11 is a sectional view on arrow B-B of the structure 100 illustrated in Fig. 10.

As illustrated in Fig. 10 and Fig. 11, the bonding roller 510 is a roller configured to rotate about a rotary shaft 511, and the bonding roller 520 is a roller configured to rotate about a rotary shaft 521. Pressing force in a direction in which the bonding surface 11a and the bonding surface 21a come close to each other is applied to the pair of bonding rollers 510 and 520 in the height direction HD by a pressing mechanism (not illustrated).

As illustrated in Fig. 10 and Fig. 11, the bonding roller 510 is formed in a cylindrical shape about the rotary shaft 511, and the bonding roller 520 is formed in a cylindrical shape about the rotary shaft 521. In step S107, the pair of bonding rollers 510 and 520 that press the first composite material 10 and the second composite material 20 are rotated and moved along the axis X (longitudinal direction LD) while being in contact with the first bonding region 11 and the second bonding region 21.

The pair of bonding rollers 510 and 520 press respective positions in the longitudinal direction LD of the first composite material 10 and the second composite material 20 while moving along the axis X (longitudinal direction LD). The pair of bonding rollers 510 and 520 move from the position indicated by the solid line to the position indicated by the dashed line illustrated in Fig. 11 and then further move to the right of Fig. 11. The pressing operation in the pressing step of step S107 is continued until the end of a heating step of step S108 described later.

In step S108, the first composite material 10, the second composite material 20, and the filler 30 are heated by the pair of bonding rollers 510 and 520 in a state where the first composite material 10 and the second composite material 20 are pressed. The pair of bonding rollers 510 and 520 illustrated in Fig. 10 have built-in heaters (not illustrated). The pair of bonding rollers 510 and 520 perform heating so that the temperature of the thermoplastic resin contained in the first composite material 10 is above the melting point, the temperature of the thermoplastic resin contained in the second composite material 20 is above the melting point, and the temperature of the thermoplastic resin contained in the filler 30 is above the melting point.

As a result of the heating operation performed so that the temperature of the thermoplastic resin contained in the first composite material 10 is above the melting point and the temperature of the thermoplastic resin contained in the second composite material 20 is above the melting point, the bonding surface 11a of the first composite material 10 is bonded to the bonding surface 21a of the second composite material 20. Further, as a result of the heating operation performed so that the temperature of the thermoplastic resin contained in the filler 30 is above the melting point, the first adjacent surface 12a of the first composite material 10 is bonded to the bonding surface 31 of the filler 30, and the second adjacent surface 22a of the second composite material 20 is bonded to the bonding surface 32 of the filler 30.

Step S108 (heating step) of the present embodiment is performed at the same time as step S107 (pressing step). As illustrated in Fig. 11, the pair of bonding rollers 510 and 520 press respective positions in the longitudinal direction LD of the first composite material 10 and the second composite material 20 while moving along the axis X (longitudinal direction LD) and, at the same time, heat respective positions in the longitudinal direction LD of the first composite material 10 and the second composite material 20. The pair of bonding rollers 510 and 520 move from the position indicated by the solid line to the position indicated by the dashed line illustrated in Fig. 11 and then further move to the right of Fig. 11.

Step S107 (pressing step) and step S108 (heating step) are performed on both the fourth region R4 and the fifth region R5 of the first composite material 10 illustrated in Fig. 2. The pressing step and the heating step are performed on both the fourth region R4 and the fifth region R5 of the first composite material 10, thereby the fourth region R4 of the first composite material 10 is bonded to the second composite material 20 via the filler 30, and the fifth region R5 of the first composite material 10 is bonded to the second composite material 20 via the filler 30.

In step S109, cooling is performed so that the temperature of the thermoplastic resin contained in the first composite material 10 is less than the melting point, the temperature of the thermoplastic resin contained in the second composite material 20 is less than the melting point, and the temperature of the thermoplastic resin contained in the filler 30 is less than the melting point. When the process of step S109 ends, a state where the first composite material 10 and the second composite material 20 are bonded via the filler 30 is obtained, and the process illustrated in Fig. 5 ends.

The cooling in step S109 is performed by leaving the structure 100 over a predetermined time in a space maintained at a predetermined temperature (for example, about 0 °C to 35 °C), for example. Further, the cooling operation in step S109 may be performed by using a cooling mechanism such as water cooling or air cooling.

According to the bonding method of the present embodiment described above, the filler-making composite material 200 is cut, and thereby a plurality of long fillers 30 are produced in the cutting step (S104). The plurality of fillers 30 are each molded into a shape corresponding to the clearance CL formed between the first adjacent region 12 of the first composite material 10 and the second adjacent region 22 of the second composite material 20 in the molding step (S105). Such a plurality of fillers 30 for reinforcing the clearance CL can be formed by a relatively easy operation of cutting the filler-making composite material 200. It is thus possible to increase the bonding strength in bonding a plurality of composite materials without requiring a large capital investment.

### Second Embodiment

Next, a bonding method of a second embodiment of the present disclosure will be described with reference to the drawings. The present embodiment is a modified example of the first embodiment and substantially the same as the first embodiment unless particularly described below, and the description thereof will be omitted below.

The structure 100 of the first embodiment is made by bonding the first composite material 10 and the second composite material 20 via the filler 30. A structure 100A of the present embodiment is made by bonding a first composite material 10A, a second composite material 20A, and a third composite material 40A via a filler 30A.

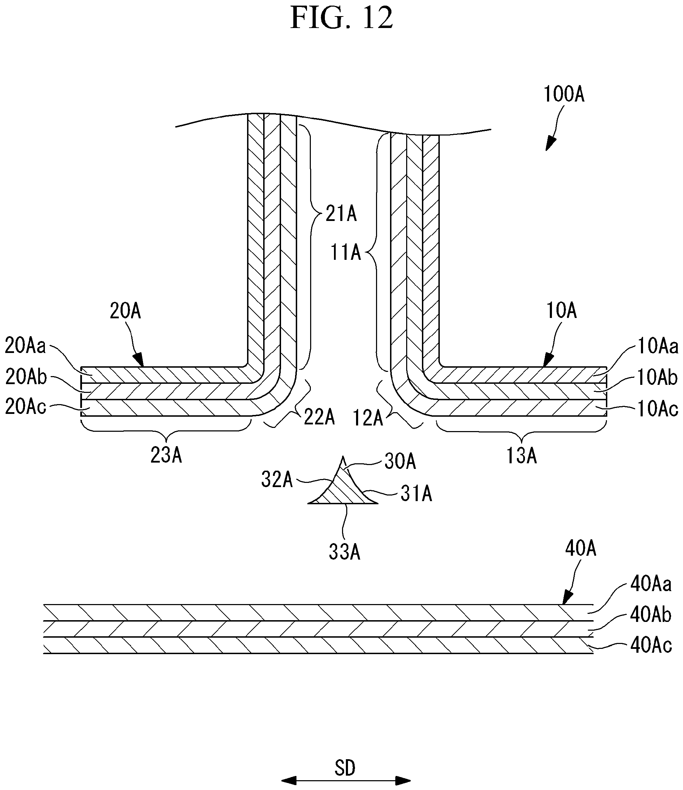

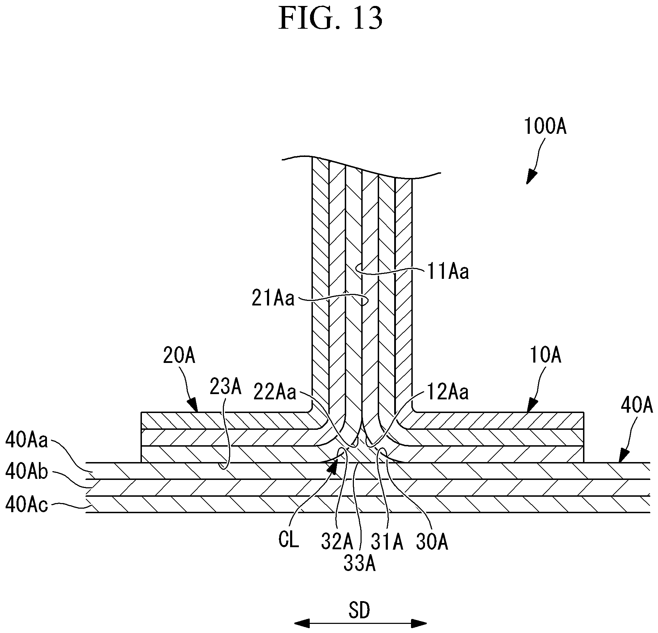

Fig. 12 is a partial sectional view illustrating the structure 100A before the first composite material 10A, the second composite material 20A, and the third composite material 40A are bonded via the filler 30A. Fig. 13 is a partial sectional view illustrating the structure 100A after the first composite material 10A, the second composite material 20A, and the third composite material 40A are bonded via the filler 30A.

As illustrated in Fig. 12 and Fig. 13, the structure 100A of the present embodiment includes the first composite material 10A, the second composite material 20A, the third composite material 40A, and the filler 30A that bonds the first composite material 10A, the second composite material 20A, and the third composite material 40A to each other. The first composite material 10A, the second composite material 20A, and the third composite material 40A are members each formed in a plate shape extending in the longitudinal direction LD parallel to the axis X.

Each cross section orthogonal to the axis X of the first composite material 10A and the second composite material 20A has substantially an L-shape. The cross section orthogonal to the axis X of the third composite material 40A has a planar shape extending in the shorter direction SD.

The first composite material 10A is made by laminating three layers of sheet-like composite materials 10Aa, 10Ab, and 10Ac and shaping and molding the planar-shaped laminated body (not illustrated). The second composite material 20A is made by laminating three layers of sheet-like composite materials 20Aa, 20Ab, and 20Ac and shaping and molding the planar-shaped laminated body (not illustrated). The first composite material 10A and the second composite material 20A are used as structures of an aircraft fuselage, for example.

Although the first composite material 10A and the second composite material 20A in which three layers of composite materials are laminated are used in the present embodiment, the first composite material 10A and the second composite material 20A in which two or more, any number of layers are laminated may be used. Each composite material included in the first composite material 10A and the second composite material 20A includes a fiber base material (for example, carbon fiber) and a matrix resin that is a thermoplastic resin material. Examples of the thermoplastic resin material are the same as those in the first embodiment.

As illustrated in Fig. 12, the first composite material 10A has a first bonding region 11A bonded to a second bonding region 21A of the second composite material 20A, a first adjacent region 12A adjoined to the first bonding region 11A and bonded to the filler 30A, and a planar region (first planar region) 13A adjoined to the first adjacent region 12A. The first composite material 10A is bent in an arc shape in the first adjacent region 12A connected between the first bonding region 11A and the planar region 13A in the shorter direction SD.

As illustrated in Fig. 13, the bonding surface 11Aa of the first bonding region 11A is bonded to a bonding surface 21Aa of the second composite material 20A. A first adjacent surface 12Aa of the first adjacent region 12A is bonded to a bonding surface (first bonding surface) 31A of the filler 30A.

As illustrated in Fig. 12, the second composite material 20A has a second bonding region 21A bonded to the first bonding region 11A of the first composite material 10A, a second adjacent region 22A adjoined to the second bonding region 21A and bonded to the filler 30A, and a planar region (second planar region) 23A adjoined to the second adjacent region 22A. The second composite material 20A is bent in an arc shape in the second adjacent region 22A connected between the second bonding region 21A and the planar region 23A in the shorter direction SD.

As illustrated in Fig. 13, a bonding surface 21Aa of the second bonding region 21A is bonded to the bonding surface 11Aa of the first composite material 10A. A second adjacent surface 22Aa of the second adjacent region 22A is bonded to a bonding surface (second bonding surface) 32A of the filler 30A.

The filler 30A is a member that bonds the first composite material 10A, the second composite material 20A, and the third composite material 40A to each other in the clearance CL formed between the first composite material 10, the second composite material 20, and the third composite material 40A. The filler 30A has a bonding surface 31A, a bonding surface 32A, and a connecting surface 33A and is formed in a substantially triangular prism extending in the longitudinal direction LD. The bonding surface 31A has a shape similar to the arc-shaped first adjacent region 12A, and the bonding surface 32A has a shape similar to the arc-shaped second adjacent region 22A. The connecting surface 33A is a surface connecting the bonding surface 31A and the bonding surface 32A to each other.

As illustrated in Fig. 13, the clearance CL is formed between the first composite material 10A, the second composite material 20A, and the third composite material 40A in a state where the bonding surface 11Aa of the first composite material 10A and the bonding surface 21Aa of the second composite material 20A are arranged to face each other, the planar region 13A of the first composite material 10A and the third composite material 40A are arranged to face each other, and the planar region 23A of the second composite material 20A and the third composite material 40A are arranged to face each other. The clearance CL is formed so as to extend along the axis X. As illustrated in Fig. 13, the filler 30A has a shape corresponding to the clearance CL and is arranged so as to fill the clearance CL without forming a space.

Next, a bonding method of bonding the first composite material 10A, the second composite material 20A, and the third composite material 40A via the filler 30A will be described. The bonding method of the present embodiment is a modified example of the bonding method illustrated in Fig. 5 of the first embodiment. Features different from the first embodiment will be described below, and description of the remaining features will be omitted.

In the present embodiment, the step of molding the third composite material 40A is provided between step S102 and step S103 of the first embodiment. In the step of molding, the third composite material 40A is molded in a planar shape by laminating three layers of sheet-like composite materials 40Aa, 40Ab, and 40Ac while heating and pressing the laminated layers. As illustrated in Fig. 12, the third composite material 40A molded in this step has a planar shape whose cross section orthogonal to the longitudinal direction LD extends in the shorter direction SD.

In the present embodiment, in step S105 of Fig. 5, a plurality of fillers 30A produced by cutting the filler-making composite material 200 are molded by the forming die 300. In the present embodiment, each filler 30A is molded by the forming die 300 as illustrated below. Specifically, in step S105, the filler 30A is molded so as to have a sectional area larger than or equal to that of the clearance CL defined by the first adjacent region 12A of the first composite material 10A, the second adjacent region 22A of the second composite material 20A, and the third composite material 40A.

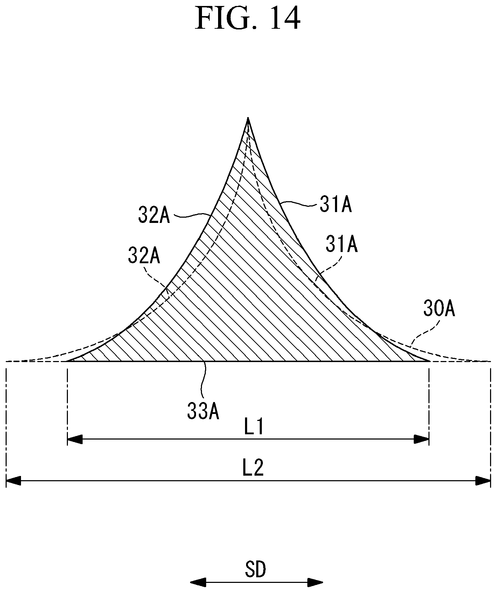

Fig. 14 is a diagram illustrating the shape of the filler 30A in a cross section orthogonal to the axis X, the solid line represents a state after the filler 30A is molded by the molding step, and the dotted line represents a state after the pressing step and the heating step end. In the present embodiment, in step S105 of Fig. 5, the filler 30A is molded by the forming die 300 such that the sectional area of the filler 30A (the area of the region surrounded by the solid line in Fig. 5) is larger than or equal to the sectional area of the clearance CL (the area of the region surrounded by the dotted line of Fig. 14). It is preferable that the sectional area of the filler 30A be 1.0 time or greater and 1.3 times or less of the sectional area of the clearance CL, for example.

Further, in the present embodiment, in step S105 of Fig. 5, the filler 30A is molded such that the length L1 of the connecting surface of the filler 30A on a cross section orthogonal to the axis X is shorter than the length L2 of the third composite material 40A facing the clearance CL. The length L2 in the shorter direction SD of the clearance CL illustrated in Fig. 14 represents the length of the third composite material 40A facing the clearance CL. Due to the length L1 being shorter than the length L2, it is possible to reliably prevent a void from occurring near a position at which the first composite material 10A and the second composite material 20A are bonded to each other (a position interposed between the first adjacent region 12A and the second adjacent region 22A).

Further, in the present embodiment, in step S106 of Fig. 5, the first bonding region 11A of the first composite material 10A is in contact with the second bonding region 21A of the second composite material 20A, the first adjacent region 12A of the first composite material 10A is in contact with the bonding surface 31A of the filler 30A, and the second adjacent region 22A of the second composite material 20A is in contact with the bonding surface 32A of the filler 30A. Further, the planar region 13A of the first composite material 10A, the planar region 23A of the second composite material 20, and the connecting surface 33A of the filler 30A are in contact with the third composite material 40A.

In the present embodiment, in step S108 (heating step) of Fig. 5, the planar region 13A of the first composite material 10A, the planar region 23A of the second composite material 20A, and the connecting surface 33A of the filler 30A are bonded to the third composite material 40A.

According to the bonding method of the present embodiment described above, when the first bonding region 11A of the first composite material 10A and the second bonding region 21A of the second composite material 20A are bonded to each other and the planar region 13A of the first composite material 10A and the planar region 23A of the second composite material 20A are bonded to the third composite material 40A, the clearance CL surrounded by the first adjacent region 12A of the first composite material 10A, the second adjacent region 22A of the second composite material 20A, and the third composite material 40A is formed. Since the filler 30A placed in the clearance CL is heated by the heating step, the first composite material 10A, the second composite material 20A, and the third composite material 40A can be tightly bonded via the filler 30A.

Further, according to a bonding method of the present embodiment, the sectional area of the filler 30A is larger than or equal to the sectional area of the clearance CL defined by the first adjacent region 12A of the first composite material 10A, the second adjacent region 22A of the second composite material 20A, and the third composite material 40A. It is thus possible to prevent a void from occurring any of a part between the first composite material 10A and the filler 30A, a part between the second composite material 20A and the filler 30A, and a part between the third composite material 40A and the filler 30A.

Further, according to the bonding method of the present embodiment, the length L1 of the connecting surface 33A of the filler 30A in a cross section orthogonal to the axis X is shorter than the length L2 of the third composite material 40A facing the clearance CL, and this can reliably prevent a void from occurring near a position where the first composite material 10A and the second composite material 20A are bonded to each other.

### Other Embodiments

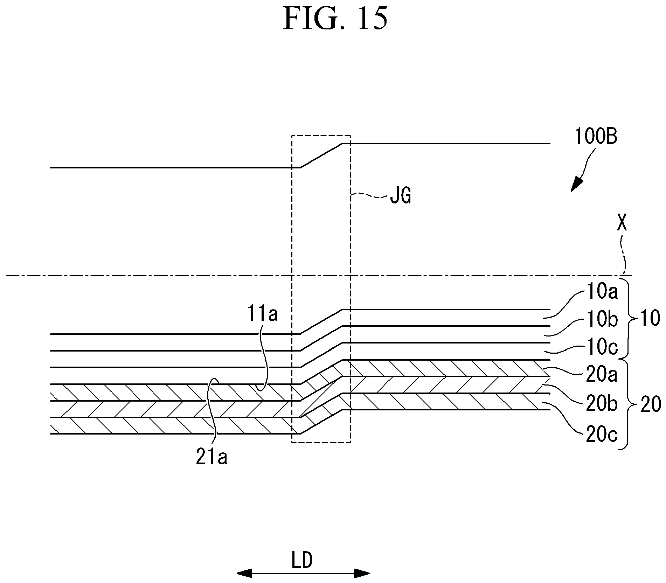

Although, in the above description, the first composite material 10 and the second composite material 20 of the structure 100 have the same shape at respective positions in the longitudinal direction LD, other forms may be employed. For example, as with a structure 100B of a first modified example illustrated in Fig. 15, a structure in which level difference portions (joggle portion) JG are formed in both the first composite material 10 and the second composite material 20 at one or a plurality of portions in the longitudinal direction LD may be employed. In the case of the present modified example, one or more level differences whose shapes correspond to the level difference portions JG are provided at one or a plurality of portions in the longitudinal direction LD of the forming die 300 so as to have a shape along the shape of the level difference portion JG.

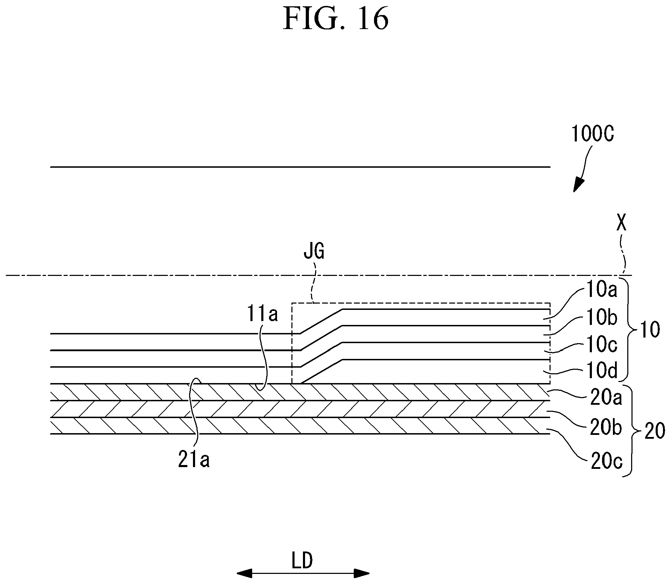

Further, for example, as with a structure 100C of a second modified example illustrated in Fig. 16, a structure in which one or more level difference portions (joggle portion) JG are formed only in the first composite material 10 at one or a plurality of portions in the longitudinal direction LD may be employed. In the case of the present modified example, a composite material 10d is placed to a part in the longitudinal direction LD of the first composite material 10, and no composite material 10d is placed to a part of the remaining portion in the longitudinal direction of the first composite material 10.

Further, in the second modified example, one or more level difference portions whose shapes correspond to the level difference portions JG at one or a plurality of portions in the longitudinal direction LD of the forming die 300 are provided along the shape of the region provided with the composite material 10d. In such a case, the filler 30 cut in step S104 (cutting step) has the same shape at respective positions in the longitudinal direction LD. Thus, when the filler 30 is molded in the forming die 300, a further composite material having the same thickness as the composite material 10d is arranged in a region corresponding to the level difference portion JG.

Further, in a third modified example, after the structure 100 is manufactured (all the processes illustrated in Fig. 5 are performed), a determination step of determining whether or not a void occurred in the structure 100 may be provided. Whether or not a void occurred in the structure 100 may be determined by visual inspection by a worker or may be determined by a detection device (not illustrated) that detects whether or not a void occurred in the structure 100.

If the determination step determines that a void occurred in the structure 100, adjustment is performed so that no void will occur in the structure 100 in the subsequent manufacturing of another structure 100. In such a case, for example, when the filler 30 is molded by the forming die 300, a further composite material is arranged so as to increase the volume of the region where the void occurred. Further, for example, when the filler 30 is placed in step S106 (placing step) of Fig. 5, a further composite material is arranged so as to increase the volume of the region where the void occurred.

The further composite material refers to a composite material containing about one to three layers of fiber base material and matrix resin (thermoplastic resin material), for example. The number of layers of the further composite material is set in accordance with the size of a void that occurred in the structure 100. In step S106 (placing step) of Fig. 5, layered sheet-like composite materials in which the number of layers is set in accordance with the void size are placed in at least either a part between the first adjacent region 12 and the filler 30 or a part between the second adjacent region 22 and the filler 30. This can suitably prevent a void from occurring in the clearance CL.

The bonding method described above in the embodiments is understood as follows, for example.

The bonding method according to the present disclosure is a bonding method for bonding a first composite material (10) and a second composite material (20) to each other both containing a fiber base material and a thermoplastic resin, the first composite material is formed in a plate shape extending along an axis (X) and has a first bonding region (11) and a first adjacent region (12) adjacent to the first bonding region, the second composite material is formed in a plate shape extending along the axis and has a second bonding region (21) and a second adjacent region (22) adjacent to the second bonding region, and a clearance (CL) extending along the axis is formed between the first adjacent region and the second adjacent region with the first bonding region and the second bonding region being arranged to face each other. The bonding method includes: a cutting step (S104) of cutting a bonding composite material (200) containing a fiber base material and a thermoplastic resin and formed in a plate shape to produce a plurality of long bonding members (30); a molding step (S105) of molding a bonding member of the plurality of bonding members produced in the cutting step into a shape corresponding to the clearance by placing and heating the bonding member in a forming die (300); a placing step (S106) of placing, in the clearance, the bonding member molded in the shape corresponding to the clearance in the molding step into a state where the first bonding region is in contact with the second bonding region and the first adjacent region and the second adjacent region are in contact with the bonding member; and a heating step (S108) of heating the first composite material, the second composite material, and the bonding member with the first adjacent region and the second adjacent region being in contact with the bonding member to bond the first bonding region to the second bonding region and bond the first adjacent region and the second adjacent region to the bonding member.

According to the bonding method of the present disclosure, in the cutting step, a bonding composite material containing a fiber base material and a thermoplastic resin and formed in a plate shape is cut, and a plurality of long bonding members are produced. In the molding step, each of the plurality of bonding members is molded in a shape corresponding to a clearance formed between the first adjacent region of the first composite material and the second adjacent region of the second composite material. A plurality of bonding members used for reinforcing the clearance can be formed by a relatively easy operation of cutting the bonding composite material formed in a plate shape. It is thus possible to increase the bonding strength in bonding a plurality of composite materials without requiring a large capital investment.

In the bonding method according to the present disclosure, the first composite material may have a first planar region adjacent to the first adjacent region, the second composite material may have a second planar region adjacent to the second adjacent region, the placing step may provide a state where the first planar region, the second planar region, and the bonding member are in contact with a third composite material containing a fiber base material and a thermoplastic resin and formed in a plate shape, and the heating step may bond the first planar region, the second planar region, and the bonding member to the third composite material.

According to the bonding method of the present configuration, when the first bonding region of the first composite material and the second bonding region of the second composite material are bonded to each other and the first planar region of the first composite material and the second planar region of the second composite material are bonded to the third composite material, a clearance surrounded by the first adjacent region of the first composite material, the second adjacent region of the second composite material, and the third composite material is formed. Since the bonding member placed in this clearance is heated in the heating step, the first composite material, the second composite material, and the third composite material can be tightly bonded via the bonding member.

In the bonding method according to the present configuration, the molding step may mold the bonding member so that a sectional area of the bonding member is larger than or equal to a sectional area of the clearance defined by the first adjacent region, the second adjacent region, and the third composite material.

According to the bonding method of the present aspect, the sectional area of the bonding member is larger than or equal to the sectional area of the clearance defined by the first adjacent region of the first composite material, the second adjacent region of the second composite material, and the third composite material. It is thus possible to prevent a void from occurring in any of a part between the first composite material and the bonding member, a part between the second composite material and the bonding member, and a part between the third composite material and the bonding member.

In the bonding method of the present aspect, the molding step may mold the bonding member into a triangular prism having a first bonding surface (31) bonded to the first adjacent region, a second bonding surface (32) bonded to the second adjacent region, and a connecting surface (33) connecting the first bonding surface and the second bonding surface to each other, and the molding step may mold the bonding member so that a length (L1) of the connecting surface in a cross section orthogonal to the axis is shorter than a length (L2) of the third composite material facing the clearance.

According to the bonding method of the present form, the length of the connecting surface of the bonding member in the cross section orthogonal to the axis is shorter than the length of the third composite material facing the clearance, and this can reliably prevent a void from occurring near a position where the first composite material and the second composite material are bonded to each other.

The bonding method according to the present disclosure may have a determination step of determining whether or not a void occurred in the clearance, and if the determination step determines that a void occurred, the placing step may place a sheet-like composite material containing a fiber base material and a thermoplastic resin in at least either a part between the first adjacent region and the bonding member or a part between the second adjacent region and the bonding member.

According to the bonding method of the present configuration, when a void occurs, a sheet-like composite material is placed in at least either a part between the first adjacent region and the bonding member or a part between the second adjacent region and the bonding member so as to fill the clearance between the first composite material and the second composite material that are subsequently bonded. It is thus possible to suitably prevent a void from occurring in the clearance between the first composite material and the second composite material.

## Claims

1. A bonding method for bonding a first composite material (10) and a second composite material (20) to each other both containing a fiber base material and a thermoplastic resin,
wherein the first composite material (10) is formed in a plate shape extending along an axis (X) and has a first bonding region (11) and a first adjacent region (12) adjacent to the first bonding region (11),
wherein the second composite material (20) is formed in a plate shape extending along the axis (X) and has a second bonding region (21) and a second adjacent region (22) adjacent to the second bonding region (21), and
wherein a clearance (CL) extending along the axis (X) is formed between the first adjacent region (12) and the second adjacent region (22) with the first bonding region (11) and the second bonding region (21) being arranged to face each other,
the bonding method comprising:
a cutting step (S104) of cutting a bonding composite material (200) containing a fiber base material and a thermoplastic resin and formed in a plate shape to produce a plurality of long bonding members (30);
a molding step (S105) of molding a bonding member (30) of the plurality of bonding members (30) produced in the cutting step (S104) into a shape corresponding to the clearance (CL) by placing and heating the bonding member (30) in a forming die (300);
a placing step (S106) of placing, in the clearance (CL), the bonding member (30) molded in the shape corresponding to the clearance (CL) in the molding step (S105) into a state where the first bonding region (11) is in contact with the second bonding region (21) and the first adjacent region (12) and the second adjacent region (22) are in contact with the bonding member (30); and
a heating step (S108) of heating the first composite material (10), the second composite material (20), and the bonding member (30) with the first adjacent region (12) and the second adjacent region (22) being in contact with the bonding member (30) to bond the first bonding region (11) to the second bonding region (21) and bond the first adjacent region (12) and the second adjacent region (22) to the bonding member (30); wherein
the first composite material (10) has a first planar region (13A) adjacent to the first adjacent region (12),
the second composite material (20) has a second planar region (23A) adjacent to the second adjacent region (22),
the placing step (S106) provides a state where the first planar region (13A), the second planar region (23A), and the bonding member (30) are in contact with a third composite material (40A) containing a fiber base material and a thermoplastic resin and formed in a plate shape, and
the heating step (S108) bonds the first planar region (13A), the second planar region (23A), and the bonding member (30) to the third composite material (40A);
wherein the molding step (S105) molds the bonding member (30) so that a sectional area of the bonding member (30) is larger than or equal to a sectional area of the clearance (CL) defined by the first adjacent region (12), the second adjacent region (22), and the third composite material (40A).

2. The bonding method according to claim 1,
wherein the molding step (S105) molds the bonding member 830) so that a sectional area of the bonding member (30) is larger than the sectional are of the clearance (CL) defined by the first adjacent region 812), the second adjacent region (22), and the third composite material (40A);
wherein the molding step (S105) molds the bonding member into a triangular prism having a first bonding surface (31) bonded to the first adjacent region (12), a second bonding surface (32) bonded to the second adjacent region (22), and a connecting surface (33) connecting the first bonding surface (31) and the second bonding surface (32) to each other, and
wherein the molding step (S105) molds the bonding member (30) so that a length of the connecting surface in a cross section orthogonal to the axis (X) is shorter than a length of the third composite material (40A) facing the clearance (CL) .

3. The bonding method according to any one of claim 1 to claim 2 further comprising a determination step of determining whether or not a void occurred in the clearance (CL),
wherein if the determination step determines that a void occurred, the placing step (S106) places a sheet-like composite material containing a fiber base material and a thermoplastic resin in at least either a part between the first adjacent region (12) and the bonding member (30) or a part between the second adjacent region (22) and the bonding member (30).

## Patentansprüche

1. Bondingsverfahren zum Bonden eines ersten Verbundmaterials (10) und eines zweiten Verbundmaterials (20) miteinander, die beide ein Faserbasismaterial und ein thermoplastisches Harz enthalten,
wobei das erste Verbundmaterial (10) in einer sich entlang einer Achse (X) erstreckenden Plattenform ausgebildet ist und einen ersten Bondingsbereich (11) und einen ersten angrenzenden Bereich (12) neben dem ersten Bondingsbereich (11) aufweist,
wobei das zweite Verbundmaterial (20) in einer sich entlang der Achse (X) erstreckenden Plattenform ausgebildet ist und einen zweiten Bondingsbereich (21) und einen zweiten angrenzenden Bereich (22) aufweist, der an den zweiten Bondingsbereich (21) angrenzt, und
wobei zwischen dem ersten angrenzenden Bereich (12) und dem zweiten angrenzenden Bereich (22) ein sich entlang der Achse (X) erstreckender Freiraum (CL) ausgebildet ist, wobei der erste Bondingsbereich (11) und der zweite Bondingsbereich (21) so angeordnet sind, dass sie einander gegenüberliegen,
wobei das Bondingsverfahren folgendes umfasst:
einen Schneideschritt (S104) des Schneidens eines Bondingsverbundmaterials (200), das ein Faserbasismaterial und ein thermoplastisches Harz enthält und in einer Plattenform ausgebildet ist, um eine Vielzahl von langen Bondingselementen (30) zu produzieren;
einen Formungsschritt (S105) des Formens eines Bondingselements (30) aus der Vielzahl von Bondingselementen (30), die im Schneideschritt (S104) produziert wurden, in eine Form, die dem Freiraum (CL) entspricht, indem das Bondingselement (30) in einem Formwerkzeug (300) platziert und erwärmt wird;
einen Platzierungsschritt (S106) des Platzierens des Bondingselements (30), das im Formungsschritt (S105) in der dem Freiraum (CL) entsprechenden Form ausgebildet wurde, in dem Freiraum (CL) in einen Zustand, in dem der erste Bondingsbereich (11) in Kontakt mit dem zweiten Bondingsbereich (21) ist und der erste angrenzende Bereich (12) und der zweite angrenzende Bereich (22) in Kontakt mit dem Bondingselement (30) sind; und
einen Erwärmungsschritt (S108) des Erwärmens des ersten Verbundmaterials (10), des zweiten Verbundmaterials (20) und des Bondingselements (30), wobei der erste angrenzende Bereich (12) und der zweite angrenzende Bereich (22) in Kontakt mit dem Bondingselement (30) sind, um den ersten Bondingsbereich (11) mit dem zweiten Bondingsbereich (21) zu bonden und den ersten angrenzenden Bereich (12) und den zweiten angrenzenden Bereich (22) mit dem Bondingselement (30) zu bonden; wobei
das erste Verbundmaterial (10) einen ersten planaren Bereich (13A) aufweist, der an den ersten angrenzenden Bereich (12) angrenzt,
das zweite Verbundmaterial (20) einen zweiten planaren Bereich (23A) aufweist, der an den zweiten angrenzenden Bereich (22) angrenzt,
der Platzierungsschritt (S106) einen Zustand bereitstellt, in dem der erste planare Bereich (13A), der zweite planare Bereich (23A) und das Bondingselement (30) in Kontakt mit einem dritten Verbundmaterial (40A) sind, das ein Faserbasismaterial und ein thermoplastisches Harz enthält und in einer Plattenform ausgebildet ist, und
der Erwärmungsschritt (S108) den ersten planaren Bereich (13A), den zweiten planaren Bereich (23A) und das Bondingselement (30) mit dem dritten Verbundmaterial (40A) bondet;
wobei der Formungsschritt (S105) das Bondingselement (30) so formt, dass ein Querschnittsbereich des Bondingselements (30) größer als oder gleich einem Querschnittsbereich des Freiraums (CL) ist, der durch den ersten angrenzenden Bereich (12), den zweiten angrenzenden Bereich (22) und das dritte Verbundmaterial (40A) definiert ist.

2. Bondingsverfahren nach Anspruch 1,
wobei der Formungsschritt (S105) das Bondingselement 830) so formt, dass ein Querschnittsbereich des Bondingselements (30) größer als der Querschnittsbereich des Freiraums (CL) ist, der durch den ersten angrenzenden Bereich 812), den zweiten angrenzenden Bereich (22) und das dritte Verbundmaterial (40A) definiert ist;
wobei der Formungsschritt (S105) das Bondingselement zu einem dreieckigen Prisma formt, das eine erste Bondingsfläche (31), die mit dem ersten angrenzenden Bereich (12) gebondet ist, eine zweite Bondingsfläche (32), die mit dem zweiten angrenzenden Bereich (22) gebondet ist, und eine Verbindungsfläche (33) aufweist, die die erste Bondingsfläche (31) und die zweite Bondingsfläche (32) miteinander verbindet, und
wobei der Formungsschritt (S105) das Bondingselement (30) so formt, dass eine Länge der Verbindungsfläche in einem Querschnitt orthogonal zur Achse (X) kürzer ist als eine Länge des dritten Verbundmaterials (40A), das dem Freiraum (CL) gegenüberliegt.

3. Bondingsverfahren nach einem der Ansprüche 1 bis 2, weiter umfassend einen Bestimmungsschritt des Bestimmens, ob in dem Freiraum (CL) ein Hohlraum entstanden ist oder nicht,
wobei, falls der Bestimmungsschritt bestimmt, dass ein Hohlraum entstanden ist, der Platzierungsschritt (S106) ein blattförmiges Verbundmaterial, das ein Faserbasismaterial und ein thermoplastisches Harz enthält, in mindestens entweder einem Teil zwischen dem ersten angrenzenden Bereich (12) und dem Bondingselement (30) oder einem Teil zwischen dem zweiten angrenzenden Bereich (22) und dem Bondingselement (30) platziert.

## Revendications

1. Procédé de liaison pour lier un premier matériau composite (10) et un deuxième matériau composite (20) l'un à l'autre, chacun des deux contenant un matériau à base de fibres et une résine thermoplastique,
dans lequel le premier matériau composite (10) se présente sous la forme d'une plaque s'étendant le long d'un axe (X) et présente une première région de liaison (11) et une première région adjacente (12) adjacente à la première région de liaison (11),
dans lequel le deuxième matériau composite (20) se présente sous la forme d'une plaque s'étendant le long de l'axe (X) et présente une deuxième région de liaison (21) et une deuxième région adjacente (22) adjacente à la deuxième région de liaison (21), et
dans lequel un dégagement (CL) s'étendant le long de l'axe (X) est formé entre la première région adjacente (12) et la deuxième région adjacente (22), la première région de liaison (11) et la deuxième région de liaison (21) étant agencées de manière à se faire mutuellement face,
le procédé de liaison comprenant :
une étape de découpe (S104) consistant à découper un matériau composite de liaison (200) contenant un matériau à base de fibres et une résine thermoplastique et se présentant sous la forme d'une plaque pour produire une pluralité d'éléments de liaison longs (30) ;
une étape de moulage (S105) consistant à mouler un élément de liaison (30) de la pluralité d'éléments de liaison (30) produits lors de l'étape de découpe (S104) dans une forme correspondant au dégagement (CL) en plaçant et en chauffant l'élément de liaison (30) dans une matrice de formage (300) ;
une étape de placement (S106) consistant à placer, dans le dégagement (CL), l'élément de liaison (30) moulé dans la forme correspondant au dégagement (CL) lors de l'étape de moulage (S105) dans un état où la première région de liaison (11) est en contact avec la deuxième région de liaison (21) et la première région adjacente (12) et la deuxième région adjacente (22) sont en contact avec l'élément de liaison (30) ; et
une étape de chauffage (S108) consistant à chauffer le premier matériau composite (10), le deuxième matériau composite (20) et l'élément de liaison (30), la première région adjacente (12) et la deuxième région adjacente (22) étant en contact avec l'élément de liaison (30) pour lier la première région de liaison (11) à la deuxième région de liaison (21) et pour lier la première région adjacente (12) et la deuxième région adjacente (22) à l'élément de liaison (30) ; dans lequel
le premier matériau composite (10) présente une première région plane (13A) adjacente à la première région adjacente (12),
le deuxième matériau composite (20) présente une deuxième région plane (23A) adjacente à la deuxième région adjacente (22),
l'étape de placement (S106) fournit un état où la première région plane (13A), la deuxième région plane (23A) et l'élément de liaison (30) sont en contact avec un troisième matériau composite (40A) contenant un matériau à base de fibres et une résine thermoplastique et se présentant sous la forme d'une plaque, et
l'étape de chauffage (S108) lie la première région plane (13A), la deuxième région plane (23A) et l'élément de liaison (30) au troisième matériau composite (40A) ;
dans lequel l'étape de moulage (S105) moule l'élément de liaison (30) de telle sorte qu'une surface transversale de l'élément de liaison (30) soit supérieure ou égale à une surface transversale du dégagement (CL) défini par la première région adjacente (12), la deuxième région adjacente (22) et le troisième matériau composite (40A).

2. Procédé de liaison selon la revendication 1,
dans lequel l'étape de moulage (S105) moule l'élément de liaison 830) de telle sorte qu'une surface transversale de l'élément de liaison (30) soit plus grande que la surface transversale du dégagement (CL) défini par la première région adjacente 812), la deuxième région adjacente (22) et le troisième matériau composite (40A) ;
dans lequel l'étape de moulage (S105) moule l'élément de liaison en un prisme triangulaire présentant une première surface de liaison (31) liée à la première région adjacente (12), une deuxième surface de liaison (32) liée à la deuxième région adjacente (22), et une surface de connexion (33) connectant la première surface de liaison (31) et la deuxième surface de liaison (32) l'une à l'autre, et
dans lequel l'étape de moulage (S105) moule l'élément de liaison (30) de telle sorte qu'une longueur de la surface de connexion dans une section transversale orthogonale à l'axe (X) soit inférieure à une longueur du troisième matériau composite (40A) faisant face au dégagement (CL).

3. Procédé de liaison selon l'une quelconque des revendications 1 à 2 comprenant en outre une étape de détermination consistant à déterminer si un vide s'est ou non formé dans le dégagement (CL),
dans lequel, si l'étape de détermination détermine qu'un vide s'est formé, l'étape de placement (S106) place un matériau composite en forme de feuille contenant un matériau à base de fibres et une résine thermoplastique dans au moins soit une partie entre la première région adjacente (12) et l'élément de liaison (30) soit une partie entre la deuxième région adjacente (22) et l'élément de liaison (30).
